# EUROPÄISCHE PATENTSCHRIFT

(11) **EP 0 813 353 B1**
(45) Veröffentlichungstag und Bekanntmachung des Hinweises auf die Patenterteilung: **19.09.2001**
(21) Anmeldenummer: 97109365.3
(22) Anmeldetag: 10.06.1997
(51) Int. Cl.: H05B 37/02, G01S 7/40, A47F 11/10

(54) **Beleuchtungsvorrichtung**
Illumination device
Dispositif d'éclairage

(30) Priorität: 11.06.1996 DE 19623188; 11.09.1996 DE 19636963
(43) Veröffentlichungstag der Anmeldung: 17.12.1997
(73) Patentinhaber: Steinel GmbH & Co. KG, 33442 Herzebrock-Clarholz (DE)
(72) Erfinder: Steinel, Ingo, 86825 Bad Wörishofen (DE)
(74) Vertreter: Hiebsch, Gerhard F., Dipl.-Ing.

(56) Entgegenhaltungen:
- EP-A- 0 066 691
- EP-A- 0 440 862
- EP-A- 0 533 062
- EP-A- 0 558 349
- DE-A- 2 803 723
- FR-A- 2 624 712
- US-A- 4 225 808
- US-A- 4 656 481

## Beschreibung

Die vorliegende Erfindung betrifft eine Beleuchtungsvorrichtung nach dem Oberbegriff des Patentanspruches 1.

Gerade in Jahreszeiten mit frühem abendlichen Dämmerungseinbruch ist es für Besitzer von Ladengeschäften mit Schaufenstern od.dgl. von außen einsehbaren Präsentationsflächen notwendig, die Schaufenster künstlich zu beleuchten, um so auch noch in der Dunkelheit kommenden Besuchern das Betrachten der Auslagen in einem Schaufenster zu ermöglichen. Für einen Ladenbesitzer kommt es dabei zu einem technischen Optimierungsproblem: Zwar wäre zum Erreichen einer maximalen Auffälligkeit bzw. einer positiven Kundenwirkung das durchgehende Beleuchten des Schaufensters wünschenswert, andererseits würde durch eine solche Maßnahme -- gerade in wenig frequentierten Nachtstunden -- unnötiger Stromverbrauch und Leuchtmittelverschleiß auftreten.

Bislang wird dieses Problem so gelöst, daß manuell oder automatisch zu einem vorgewählten Zeitpunkt am Abend die Schaufensterbeleuchtung abgeschaltet wird. Dies hat allerdings den Nachteil, daß ein solcher -- feststehender - - Zeitpunkt potentiell Einschalt-Zeiträume überstreicht, in welchen kein Betrachter anwesend ist, und darüber hinaus die Gefahr besteht, daß zu einem späteren Zeitpunkt auftretende Personen das Schaufenster nur noch im unbeleuchteten Zustand vorfinden.

Aus Anwendungen in Museen od.dgl. ist es bekannt, in einem Schaufenster angeordnete Exponate nur bei Anwesenheit eines Betrachters zu beleuchten, und zwar wird hier die Beleuchtung durch Betätigung eines extern zugänglichen Bedienknopfes durch den Betrachter selbst bewirkt. Allerdings erscheint diese Lösung auf das vorbeschriebene Steuerungsproblem nicht ohne weiteres anwendbar; selbst wenn man unterstellt, daß sich einige Passanten bemühen würden, einen Bedienknopf zur Beleuchtung eines Schaufensters zu betätigen, müßte doch davon ausgegangen werden, daß ein nicht unbeträchtlicher Anteil von -- gerade eiligen -- Passanten sich nicht die Zeit nehmen wird, um aktiv tätig zu werden. Darüber hinaus ist gerade in innerstädtischen Ballungsräumen von einer nicht vernachlässigbaren Sabotage- oder Beschädigungsgefahr auszugehen, der eine extern angeordnete Betätigungseinrichtung für die Schaufensterbeleuchtung ausgesetzt ist.

Aus der DE-OS 28 03 723 ist eine Beleuchtungsvorrichtung nach dem Oberbegriff des Patentanspruches 1 bekannt. Insbesondere betrifft dieser Stand der Technik eine Beleuchtungsvorrichtung mit einem in einem Außenbereich vorgesehenen Radargerät, das als Reaktion auf Passantenbewegungen od.dgl. eine Beleuchtung aktivieren kann.

Ferner ist aus der US 4,225,808 eine Beleuchtungsvorrichtung für eine Schaufensterauslage bekannt, welche in einem Schaufensteraußenbereich vorhandende Leuchtmittel zum Beleuchten der Schaufensterauslage aufweist, und ferner eine ebenfalls im Schaufensteraußenbereich vorhandene Sensorik zum Aktivieren der Leuchtmittel.

Aus der FR-A-2 624 712 ist ein Schaukasten mit einem im Sockel untergebrachten Radar bekannt. Dabei wird die Beleuchtung durch eine Steuervorrichtung bei Annäherung einer Person von Parbigem Licht auf weißes Licht umgeschaltet.

Diese bekannten Vorrichtungen ermöglichen daher bereits das flexible, bewegungsabhängige Aktivieren der Beleuchtung; nach wie vor sind diese bekannten Vorrichtungen jedoch durch Vandalismus, Temperatur od.dgl. Beeinflussungen gefährdet.

Aufgabe der vorliegenden Erfindung ist es daher, eine gattungsgemäße Beleuchtungsvorrichtung zu schaffen, welche insbesondere Sabotage- oder Beschädigungsgefahr (bzw. auch eine Beeinflussung durch äußere Witterungseinflüsse) vermindert, und welche darüber hinaus die Voraussetzung schafft, den Beleuchtungsbetrieb weiter zu optimieren und zu flexibilisieren.

Die Aufgabe wird durch die Beleuchtungsvorrichtung mit den Merkmalen des Patentanspruches 1 gelöst, vorteilhafte Weiterbildungen der Erfindung sind in den Unteransprüchen beschrieben.

Vorteilhaft gestattet dabei die auf Mikrowellenbasis arbeitende Sensoreinrichtung das zuverlässige und gleichzeitig beeinflussungs- bzw. zerstörungssichere Erfassen von Passanten vor dem Schaufenster, so daß entsprechend die Schaufensterbeleuchtung aktiviert werden kann, ohne daß etwa ein separates, äußeres Betätigungs- und/oder Sensorelement montiert werden muß.

Auch ist durch diese technischen Maßnahmen der Aufbau bzw. die Anordnung des Sensors bzw. der Steuervorrichtung dahingehend vereinfacht, daß nicht etwa gesonderte Vorkehrungen zum Schutz vor Außeneinwirkungen wie Feuchtigkeit oder Kälte getroffen werden müssen, wie dies bei einer Außenmontage der Fall gewesen wäre. Auf diese Weise ist die erfindungsgemäße Beleuchtungsvorrichtung -- die besonders bevorzugt die Sensoreinrichtung an bzw. in der Trägervorrichtung selbst gehalten aufweist -- einfach und preisgünstig in der Herstellung und zeichnet sich durch hohe Betriebssicherheit aus.

So bietet es sich an, den erfindungsgemäßen Radarsensor mit einer Richtantenne auszubilden, so daß ein Erfassungsbereich zuverlässig auf einen vorbestimmten Raum außerhalb der Schaufensterscheibe begrenzt werden kann. Substrat-Antennen der erfindungsgemäßen Art erlauben das einfache, großserientaugliche Herstellen von geeigneten Mikrowellenantennen mit gut vorbestimmbaren, reproduzierbaren Richteigenschaften. Ergänzend kann durch zusätzliche Reflektoren, Blenden od.dgl. der Erfassungsbereich beeinflußt werden, so daß beispielsweise eine konkrete Anpassung bei einer Montage vor Ort möglich ist.

Besonders geeignet wird der erfindungsgemäße Radarsensor als Breitband-Impulsradarsensor realisiert (wobei unter "Breitband" verstanden werden sollte, daß das vom Sensor emittierte Sendespektrum in Frequenzrichtung mindestens etwa 20 % der mittleren (Träger-) Frequenz beträgt). Derartige Radarsensoren sind nicht nur einfach und preisgünstig herzustellen; sie vermindern zudem kritischen Einstellungsund Abgleichungsaufwand. Im erfindungsgemäß vorgegebenen Frequenzbereich unterhalb etwa 20 GHz sind zudem die Eigenschaften der Mikrowellen so, daß Schaufensterscheiben zuverlässig durchdrungen werden können.

Erfindungsgemäß ist eine Auswerteinheit zum zusätzlichen Verarbeiten der Steuersignale der Steuereinheit vorgesehen, die Auswertsignale bereitstellen kann, mit welchen Rückschlüsse auf Beleuchtungszeitpunkte, Beleuchtungsdauer, Einschaltzahlen und dergleichen möglich sind. Derartige Auswertsignale erlauben daher eine kontinuierliche, zusätzliche Optimierung der Beleuchtung -- beispielsweise durch Bestimmung geeigneter, minimaler Einschaltdauern -- zum Optimieren von Stromverbrauch und Leuchtmittellebensdauer. Als Nebeneffekt wären derartige Auswertsignale auch zur Feststellung von Passantenfrequenz und -interesse, Verweilzeitpunkt, mittlerer Verweildauer usw. benutzbar und könnten damit indirekt Rückschlüsse auf Attraktivität der Schaufensterauslage oder Kundeninteresse ermöglichen.

Bevorzugt ist eine Aktivierung bzw. Deaktivierung der Leuchtmittel nicht nur von Anwesenheit oder Bewegung von Passanten vor dem Schaufenster abhängig, sondern zusätzlich von einem absoluten Lichtpegel des Umgebungslichts: Es könnte beispielsweise sinnvoll sein, bei Tageslicht entweder keine Schaufensterbeleuchtung zu aktivieren (und die Beleuchtung lediglich auf die Zeiten schwacher Umgebungshelligkeit zu beschränken), oder es könnte bei hellem Umgebungslicht die Schaufensterbeleuchtung in einen entsprechend hellen Beleuchtungszustand versetzt werden, um beabsichtigte Beleuchtungseffekte zu realisieren.

Auch ist die vorliegende Erfindung nicht auf das gesteuerte und optimierte Beleuchten eines einzelnen Schaufensters beschränkt; auch eine Mehrzahl von -- jeweils getrennt durch Bewegung und/oder Anwesenheit aktivierbaren --Beleuchtungsvorrichtungen kann geeignet über einen gemeinsamen Datenbus einer zentralen Auswerteinheit zugeordnet sein, mit welcher dann ggf. auch Unterschiede im jeweiligen Erfassungs- und Beleuchtungsverhalten bei einzelnen Schaufenstern erfaßt werden können.

Gemäß einer bevorzugten Weiterbildung der Erfindung wird die zusätzliche Aufgabe gelöst, Betriebsparameter einer erfindungsgemäßen Beleuchtungsvorrichtung einfach und mit geringstem Aufwand, selbst nach einer Montage an einem unzugänglichen Einsatzort, einzustellen bzw. zu verändern, wobei dies mittels eines unterscheidbaren mechanischen Bewegungssignals erfolgt.

Diesbezüglich ist als "mechanisches Bewegungssignal" jegliche, für den Bewegungssensor detektierbare Bewegung eines mechanischen Objekts zu verstehen, welche als Reaktion auf eine Ansteuerung generiert worden ist.

Vorteilhaft erlaubt die weiterbildungsgemäße Steuereinrichtung die Nutzung der Bewegungserfassung des Bewegungssensors für die zusätzliche Übertragung von Zustandssteuersignalen, wie etwa Steuerbefehlen od. dgl., ohne daß hierfür eine gesonderte Sende- und/oder Empfangseinrichtung am Bewegungssensor vorhanden sein muß. Vielmehr wird vorteilhaft die Bewegungserkennungsfähigkeit des Sensors ausgenutzt, und das erfinderische Prinzip liegt darin, dem bereits vorhandenen Bewegungssensor eine solche vorbestimmte und einstellbare Bewegung anzubieten, die nicht nur in der Auswertung sensorseitig von der Bewegung einer Person unterscheidbar ist, sondern die zudem auf diesem Wege die Übertragung von Steuerinformationen gestattet.

Neben der Materialersparnis wird gleichzeitig auch für diese Steuersignale der Durchdringungseffekt der Mikrowellen ausgenutzt, so daß auch für die Übertragung der Steuersignale weder eine Demontage noch sonst eine unmittelbar an der Anlage erfolgende Betätigung notwendig ist. Als Folge wird die Einstellbarkeit und insbesondere auch die nachträgliche Veränderbarkeit der Betriebsdaten erheblich vereinfacht und flexibilisiert.

Auch hat es sich als besonders vorteilhaft herausgestellt, für die Bewegungserzeugung einen elektromechanischen Energiewandler, weiter bevorzugt realisiert als dynamischer oder piezobasierter Lautsprecher, auszuwählen. Bei geeigneter Einstellung von Frequenz und Hub (Amplitude) des so erzeugten Bewegungssignals ist eine zuverlässig detektierbare, charakteristische Signalerzeugung im Bewegungserkennungssignal des Bewegungssensors möglich.

Weiter vorteilhaft ist durch geeignete Modulation eine Vielzahl von verschiedenen Steuerbefehlen übertragbar, so daß -- entsprechend den jeweiligen Steueranforderungen einer Verwendung -- sämtliche wesentlichen Steuerparameter in der erfindungsgemäß vorteilhaften Weise übertragbar sind.

Weiter vorteilhaft ist der Bewegungsgeber portabel aufgebaut, so daß eine Bedienperson diesen bzw. den daran vorgesehenen elektromechanischen Energiewandler lediglich in den Erfassungsbereich des Bewegungssensor halten und betätigen muß, um die gewünschte Reaktion in der Anlage zu erhalten.

Weitere Vorteile, Merkmale und Einzelheiten der Erfindung ergeben sich aus der nachfolgenden Beschreibung sowie anhand der Zeichnung; diese zeigt in
- Fig. 1:: eine schematische Schnittansicht der erfindungsgemäßen Beleuchtungsvorrichtung gemäß einer bevorzugten Ausführungsform und
- Fig. 2:: ein Blockschaltbild mit wesentlichen Funktionsblöcken der Beleuchtungsvorrichtung gemäß einer weiteren, bevorzugten Ausführungsform.

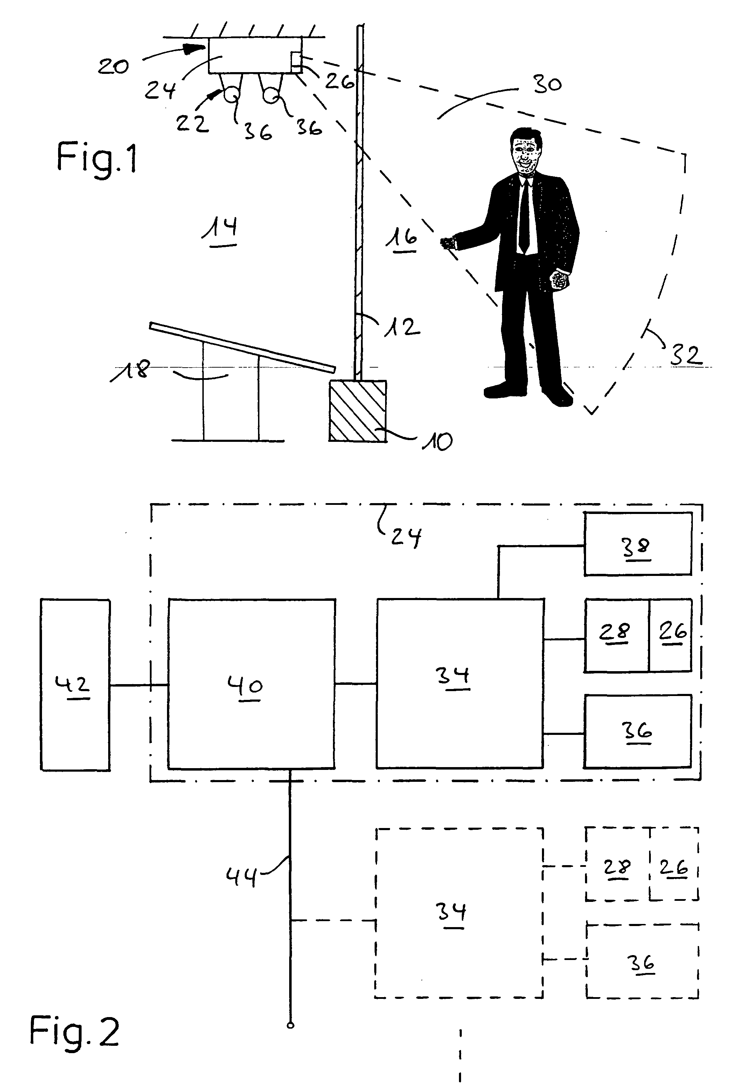

Eine sich in der Fig. 1 senkrecht von einem Sockel 10 erstreckende, schematisch gezeigte Schaufensterscheibe 12 trennt den Innenraum 14 eines Ladengeschäfts od.dgl. vom --in der Figur rechts der Scheibe 12 gelegenen -- Außenbereichs 16.

Auf einem Schaufensterdisplay 18 liegende Auslagen sind durch die Scheibe 12 für einen im Außenbereich 16 vor der Schaufensterscheibe 12 stehenden Betrachter sichtbar.

Das Schaufensterdisplay 18 bzw. darauf angeordnete Auslagen sind durch eine deckenseitig im Innenraum 14 befestigte Beleuchtungseinheit 20 beleuchtbar, die im dargestellten Ausführungsbeispiel ein Paar von geeignete Leuchtmittel 36 tragenden Beleuchtungsvorrichtungen 22, angesetzt an ein Gehäuse 24, aufweist.

Das Gehäuse 24 mit den Beleuchtungsvorrichtungen 22 bildet dabei eine modulare Einheit, die geeignet an- bzw. abgenommen werden kann und für eine Anpassung an jeweilige Beleuchtungssituationen mit einer variablen Vielzahl von (weiteren) Beleuchtungsvorrichtungen, Leuchtmitteln od.dgl. bestückbar ist.

Ein in der Fig. 1 schematisch gezeigter, in Richtung auf die Schaufensterscheibe 12 am Gehäuse 24 vorgesehener Antennenabschnitt 26 ist Bestandteil eines im Blockschaltbild der Fig. 2 gezeigten, auf Radar- bzw. Mikrowellenbasis arbeitenden Bewegungs- und/oder Anwesenheitssensors 28, dessen Erfassungsbereich -- in der Fig. 1 mit dem Bezugszeichen 30 bezeichnet -- durch die Schaufensterscheibe 12 hindurch in den Außenbereich 16 gerichtet ist und dort einen (wesentlich durch die Art und den Aufbau der Antenne 26 bestimmten) kugelausschnittsförmigen Raum markiert. Der Erfassungsbereich 30 ist distal durch einen Schalenabschnitt 32 begrenzt (maximaler Erfassungsabstand); beispielhaft können bei einem zwei Meter breiten Erfassungsbereich Personen erfaßt werden, die bis zu etwa einem Meter vom Schaufenster entfernt sind.

Die Fig. 2 zeigt schematisch anhand eines Blockdiagramms die wesentlichen funktionalen Komponenten der erfindungsgemäßen Beleuchtungsvorrichtung, wie sie bei dem in Fig. 1 skizzierten Anwendungsfall realisiert ist.

Als zentrale Einheit stellt eine Steuervorrichtung 34 die Verbindung zwischen dem Bewegungssensor 28, den in den Beleuchtungsvorrichtungen 22 sitzenden Leuchtmitteln 36, einem Helligkeitssensor 38 zum Erfassen der Umgebungshelligkeit und einer nachgeschalteten Auswerteinheit 40 her, dabei deutet die Strichpunkt-Umrandung in Fig. 2 die im bzw. am Gehäuse 24 vorgesehenen Komponenten an.

Wie sich aus der Fig. 2 ergibt, wird die Funktion, also ein jeweiliger Betriebszustand, der Leuchtmittel 36 zum einen bestimmt durch ein Erfassungssignal des Bewegungs- bzw. Anwesenheitssensors 28, und zum anderen durch einen vom Helligkeitssensor 38 erzeugten, der aktuellen Umgebungshelligkeit entsprechenden Helligkeitswert (dieser Helligkeitssensor 38 kann an geeigneter Stelle des Gehäuses 24, alternativ extern, vorgesehen sein und bevorzugt durch mechanische und/oder optische und/oder elektronische Maßnahmen einfallendes Eigenlicht der Leuchtmittel 36 kompensieren).

Durch geeignete schaltungs- und/oder programmtechnische Maßnahmen ist die Steuervorrichtung 34 so ausgebildet, daß die Leuchtmittel 36 als Reaktion auf die Erfassung eines Betrachters im Erfassungsbereich 30 des Sensors 28 aktiviert werden, bzw. nach dem Verlassen des Erfassungsbereiches durch den Betrachter wieder deaktiviert werden. Dabei ist der Begriff des "Aktivierens" bzw. "Deaktivierens" nicht auf das digitale Ein- bzw. Ausschalten beschränkt; vielmehr ist dadurch auch das stufenweise oder stufenlose Helligkeitssteuern der Leuchtmittel 36 zwischen verschiedenen Leistungs- (= Helligkeits-) Pegeln gemeint, so daß beispielsweise durch Erfassung des Bewegungssensors 28 und nachfolgende Steuerwirkung der Steuervorrichtung 34 die Leuchtmittel 36 von einem schwachen Beleuchtungszustand in maximale Helligkeit versetzt werden, sobald ein Betrachter in den Erfassungsbereich 30 gerät. Einen vorbestimmten Zeitablauf nach dem Verlassen des Betrachters wird die Beleuchtungsstärke dann wieder auf den ursprünglichen, schwachen Pegel heruntergesteuert.

Wesentlich für die vorliegende Erfindung ist die Realisierung des Bewegungs- bzw. Anwesenheitssensors auf der Basis von Mikrowellen- bzw. Radarsignalen, die durch geeignete Wahl der Frequenz und Einstellung der Sendeleistung die Schaufensterscheibe 12 durchdringen und zuverlässig vor der Scheibe 12 im Außenbereich 16 befindliche Personen bzw. Objekte erfassen. Vorteilhaft wird auf diese Weise die erfindungsgemäße Beleuchtungsvorrichtung nicht nur kompakt und an nur einem Befestigungsort gehalten; gleichzeitig ist keinerlei aufwendige und ggf. zerstörungsgefährdete Außenmontage eines Sensors im Außenbereich 16 notwendig.

Bevorzugt wird dabei zur Realisierung des Bewegungs-/Anwesenheitsdetektors 28 ein Mikrowellensensor benutzt, der auf Impulsbasis arbeitet und ein breitbandiges Impuls-Sendespektrum ausstrahlt. Mittels eines vorgegebenen, einem Erkennungsabstand entsprechenden, verzögerten Zeittores (gebildet aus Hinlauf- und Rücklaufzeit eines Signalimpulses von einem im Erkennungsabstand stehenden Objekt, also beispielsweise einem Betrachter) wird eine Vielzahl von reflektierten Impulsen erfaßt, und aus deren Empfangshäufigkeit (Integration) bzw. der Veränderung der Empfangshäufigkeit wird auf eine Bewegung des zu erfassenden Objektes rückgeschlossen. Ergänzend oder alternativ erlaubt die Impuls-Radartechnik auch eine Anwesenheitserfassung dergestalt, daß nicht reflektierte Signale von einem konstanten Erfassungsabstand -- entsprechend gewissermaßen einer Schale im Raum -- empfangen und ausgewertet werden, sondern der schalenförmige Erfassungsbereich kontinuierlich und zyklisch elektronisch durchfahren wird, so daß eine Anwesenheitserkennung -- ohne daß sich etwa das Objekt bewegen muß -- möglich ist.

Ein solcher, auf Impulsbasis arbeitender Radarsensor ist in gängigen Frequenzbereichen -- GHz, 5,7 GHz (z.B. die ISM-Bänder gemäß BAPT 222 ZV 125) oder höher -- betreibbar, sorgt durch die emittierten bzw. reflektierten Radarimpulse für eine befriedigende Durchdringung der Schaufensterscheibe 12 sowie ggf. zusätzlich des (bevorzugt nichtleitend ausgebildeten) Gehäuses 24, ohne daß etwa unmittelbarer Sichtkontakt zu den zu erfassenden Objekten oder Personen im Erfassungsbereich bestehen muß.

Der Erfassungsbereich 30 ist bevorzugt kegel- bzw. kugelausschnittsförmig und wird, wie erwähnt, i.w. durch die Strahlungscharakteristik der eingesetzten Antenne 24 beeinflußt. Wenn, wie im vorliegenden Anwendungsfall, eine Richtwirkung der Antenne 24 gewünscht wird, bieten sich für den gewählten Mikrowellenbereich geeignete, übliche Antennenformen an, wobei besonders bevorzugt großserientaugliche Bauformen -- etwa auf einem Substrat gebildete Mikrostreifenleitungs- oder Schlitzantennen zu wählen sein werden. Geeignet zusätzlich vor- bzw. aufsetzbare Reflektoren oder Blendenelemente könnten dann -- auch nachträglich -- von einem Benutzer oder Installateur verwendet werden, um den Erfassungsbereich des Bewegungssensors vor Ort zu manipulieren bzw. einem Anwendungsfall anzupassen.

Alternativ ist zur Realisierung der Bewegungserkennung auch ein nach dem Dopplerprinzip arbeitender Radarsensor denkbar. Hier wird eine Bewegung eines Objektes -- zum Beispiel eines menschlichen Körpers -- im Erfassungsbereich 30 des Sensors 28 als Frequenzverschiebung zwischen dem ausgestrahlten Signal und dem reflektierten Empfangssignal erfaßt, und diese Frequenzverschiebung wird zur Bewegungsund Geschwindigkeitserkennung ausgewertet.

Gemäß einer bevorzugten Weiterbildung kann zudem die Bewegungs- bzw. Anwesenheitserfassung durch den erfindungsgemäßen Bewegungs-/Anwesenheitssensor 28 in eine Mehrzahl von diskret erfaß- und auswertbaren Entfernungszonen aufgeteilt sein, wobei die Anwesenheit einer Person in einer jeweiligen Entfernungszone durch geeignete Auswertung einem bestimmten Schaltzustand zugeordnet sein kann.

Im beschriebenen Ausführungsbeispiel ist eine mit Hilfe des Helligkeitssensors 38 realisierte, zusätzliche Dämmerungssteuerung möglich (diese ist aber zur Realisierung des erfindungsgemäßen Prinzips keinesfalls notwendig): Durch ein Steuersignal des Sensors 38 und geeignete Verknüpfung mit Bewegungs-/Anwesenheitssteuersignalen kann so eine Steuerung der Leuchtmittel 36 abhängig von einem aktuellen Umgebungslichtpegel gemacht werden, so daß beispielsweise bei hellem Umgebungslicht eine Aktivierung der Leuchtmittel 36 völlig unterbleibt, und bei Einbruch der Dämmerung oder niedrigem Umgebungslichtpegel überhaupt erst die Schaufensterbeleuchtung aktivierbar ist. Alternativ könnte diese Wirkungskette -- z.B. zum Erreichen besonderer Beleuchtungseffekte, etwa bei Juwelierwaren -- auch umgekehrt verlaufen.

Die der Steuervorrichtung 34 nachgeordnete Auswerteinheit 40 empfängt Zustandssteuersignale der Steuervorrichtung 34 und wertet diese aus; Bestandteil der Auswerteinheit 40 ist beispielsweise eine (in den Fig. nicht gezeigte) Zähleinheit, mit welcher die Anzahl von Aktivierungs- bzw. Deaktivierungssteuerungen der Steuereinheit 34 erfaßt wird und für eine externe Auswertung, beispielsweise mittels einer externen Schnittstelle 42, bereitgestellt wird. Entsprechend ist eine Verbindung mit einem (nicht gezeigten) externen Massenspeicher möglich.

Zusätzlich weist die Auswerteinheit 40 eine mit einer (nicht gezeigten) Zeitbasis verbundene Zeiterfassungseinheit auf, mit welcher die Zeitdauer jeweiliger Beleuchtungs- bzw. Steuerzustände erfaßt- bzw. auswertbar sind: Beispielsweise könnte als Reaktion auf das Erfassen von, bezogen auf einen Referenzwert, kurzen Einschaltperioden oder häufigen Schaltzyklen innerhalb eines vorgegebenen Zeitraums Steuerwerte für eine minimale Einschaltdauer verlängert werden, so daß zu häufige Schaltvorgänge -- die sich nachteilig auf die Lebensdauer der verwendeten Leuchtmittel auswirken können -- vermieden werden. Auch ist durch die erfaßten Daten das Feststellen und Aufsummieren von absoluten Einschaltzeiten bzw. Schaltzyklen möglich, so daß Vorhersagen über die maximale Nutzungsdauer der verwendeten Leuchtmittel od.dgl. erlaubt werden.

Auch ist es vorteilhaft möglich, durch geeignete Auswertung des Bewegungs- bzw. Anwesenheitssignals eine Geschwindigkeitsfilterung vorzunehmen, dergestalt, daß etwa PKW, Jogger oder Radfahrer -- die sich gegenüber etwa einem Fußgänger zügiger bewegen -- die erfindungsgemäße Beleuchtungsvorrichtung nicht aktivieren; auf entsprechende Weise können unerwünschte Störungen durch Wetter, Laub, Wind oder Kleintiere unterdrückt werden.

Ferner ist es durch Erfassung und ggf. Errechnung einer durchschnittlichen Aufenthaltsdauer einer Person im Erfassungsbereich 30 möglich, die Leucht- bzw. Aktivierungszeiten der Leuchtmittel weiter zu optimieren, ggf. diese abhängig von einer jeweiligen Tageszeit zu gestalten, wobei hier auch Meßwerte der Auswerteinheit 40 betreffend Schalt-Häufigkeitsverteilungen entlang eines gesamten Tages hilfreich sind. (Vorteilhaft kann diesbezüglich die Anlage mit einer Funkuhr für eine Datums- und/oder Zeitsteuerung verbunden sein).

Gemäß einer weiteren, bevorzugten Weiterbildung der Erfindung wäre zudem die Auswerteinheit mit einem Statistikmodul zu versehen, welches eine über einen vorbestimmten Zeitraum erfolgenden Ablauf der verschiedenen Betriebszustände der erfindungsgemäßen Beleuchtungsvorrichtung überwacht, auswertet und aus diesen statistische Nutzdaten ermittelt, die dann Grundlage für weitere technische und/oder betriebswirtschaftliche Entscheidungen sein können.

Weiterhin wäre im Rahmen einer Erweiterung der vorliegenden Erfindung nicht nur die Steuerung von Beleuchtung im Schaufenster sinnvoll und zweckmäßig; auch das durch die Sensorerfassung benutzergesteuerte Einschalten von Monitoren, Musik, Sprachausgabe od.dgl. Medien erweckt die Aufmerksamkeit von Passanten.

Im Rahmen der vorliegenden Erfindung sollen daher nicht nur Leuchtmittel als solche liegen, sondern auch Medien im angegebenen Sinne, die zur Ausgabe von Information in akustischer oder visueller Weise eingerichtet sind.

Darüber hinaus wäre es gemäß einer alternativen Ausführungsform der Erfindung möglich, anstelle des benutzten Radarsensors einen anderen Sensortyp einzusetzen, dessen Erfassungseigenschaften ebenfalls ein Durchdringen der Schaufensterscheibe ermöglichen. Im Rahmen dieser erfindungsgemäßen Weiterbildung könnten also beispielsweise sog. Reflexlichtschranken liegen, die Lichtquellen im sichtbaren oder nahinfraroten Bereich aufweisen, oder aber Ultraschallsensoren, die in geeigneter Weise und bevorzugt mit der Schaufensterscheibe verbunden sind, so daß durch diese hindurch das Ausstrahlen und Empfangen von Ultraschallwellen erfolgen kann.

In der Fig. 2 ist gemäß einer bevorzugten Weiterbildung der Erfindung die Auswerteinheit mit einem Datenbus 44 versehen, über welchen zusätzliche Steuereinheiten mit jeweils für diese vorgesehenem Bewegungs-/Anwesenheitssensor 28 bzw. Leuchtmittel 36 verbindbar sind; derartige zusätzliche Einheiten könnten bei einem Ladengeschäft mit einer Mehrzahl von Schaufenstern jeweils getrennt zu beleuchtenden Bereichen bzw. Fenstern zugeordnet sein und dort lokal je nach Besuch durch einen Betrachter aktiviert werden. In diesem Fall würde die Auswerteinheit 40 zentral die Signale der Mehrzahl von Steuereinrichtungen auswerten, um so ggf. unterschiedliche Auswertungen vorzunehmen bzw. Vorgabewerte einstellen zu können. Generell könnte so eine allgemeine Funktionssteuerung und Auswertung mittels eines PC erfolgen, wobei weiterbildungsgemäß auch eine Fernwartung bzw. -abfrage des Systems mittels Datenfernübertragung, etwa durch ein angeschlossenes Modem, erfolgen kann.

Die weiterbildungsgemäß zur externen Parametereinstellung verwendbare Steuereinrichtung (Steuergerät) ist z.B. als durch eine Bedienperson zu betätigender, tragbarer Handapparat ausgeführt, welcher neben einem Bewegungsgebermodul einen mit diesem verbundenen Signalgenerator und Modulator sowie eine zum Ansteuern dieser Einheit vorgesehene Betätigungseinrichtung in Form einer Tastatur aufweisen kann.

Der Signalgenerator realisiert auf elektronische Weise eines oder mehrere dem als Lautsprecher ausgeführten Bewegungsgebermodul zuzuleitende Signale, welche auf dem Lautsprecher bzw. der zugehörigen Lautsprechermembran entsprechende Schwingungen bzw. Bewegungen hervorrufen. Die Art, Dauer und jeweilige Modulation einer solchen Schwingung ist durch entsprechende Auswahl mit der Tastatur möglich.

Diesbezüglich sind der Signalgenerator und das Bewegungsgebermodul so ausgewählt und ausgebildet, daß die Lautsprechermembran Schwingungen einer solchen Amplitude und Frequenz ausführt, die geeignet sind, um bei dem nachfolgend zu beschreibenden Bewegungsmeldermodul ein entsprechendes charakteristisches Bewegungserkennungssignal zu erzeugen. Durch geeignete Modulation bzw. Generierung von vorbestimmten Bewegungsmustern ist es dann möglich, verschiedenen Steuer- und Einstellbefehlen, die von einer Bedienperson über die Tastatur eingegeben und in Schwingungen umgesetzt werden, dem Bewegungsmelder zugehörige Steuerund Einstellbefehle zu geben, welche dann in geeigneter Weise den Betrieb bzw. die Einstellungen der Anlage beeinflussen können.

Zu den dergestalt steuerbaren Parametern gehören neben Grundfunktionen wie Ein- und Ausschalten auch mögliche Veränderungen im Hinblick auf Ansprechschwellen, den Erfassungsbereich, Zeiten, zu welchen die Anlage aktiviert bzw. deaktiviert sein soll, od. dgl.. Insbesondere ist es durch den Handapparat geeignet ermöglicht, auch während einer Erstinstallation der Anlage diese in montiertem (und somit schlecht zugänglichem) Zustand exakt und präzise einzustellen und somit Montage- und Wartungszeit zu minimieren. Darüber hinaus erleichtert natürlich die jederzeitige, flexible Einstellung die Universalität und Flexibilität der Gesamtanlage.

Während das beschriebene Steuergerät im dargestellten Ausführungsbeispiel mit mobilem Handapparat (und nicht gezeigter, mobiler Stromversorgung, etwa Batterien) ausgebildet ist, ist es alternativ möglich, das Steuergerät auch stationär an geeigneter Stelle vorzusehen. Auch ist es vorgesehen, anstelle des Lautsprechers für das Bewegungsgebermodul beliebige andere, geeignete Bewegungserzeugungseinrichtungen vorzusehen, etwa auf elektromechanischer, elektrodynamischer oder elektrostatischer Wirkungsweise beruhend. Beispielsweise wäre es möglich, einen Piezokristall entsprechend anzusteuern, um ein durch den Bewegungsmelder detektierbares, diskriminierbares Signal zu erzeugen.

Insgesamt erscheint es sinnvoll, ein solches diskriminierbares Bewegungssignal so zu realisieren, daß eine deutlich schnellere Bewegung erzeugt wird, als etwa von einer Person zu erwarten ist. Auf diese Weise kann dann durch geeignete Auswertung des Bewegungsmelder-Erfassungssignals eine klare Unterscheidung zwischen regulärem Bewegungsmeldebetrieb und erfindungsgemäßer Parametersteuerung erfolgen.

Es obliegt dabei der individuellen Auslegung, durch den Bewegungsgeber ein mechanisches Signal zu erzeugen, welches im Zusammenwirken mit dem Bewegungsmelder hinreichend auswertbar ist. Dabei wird es, je nach Amplitude und Frequenz des erzeugten Bewegungssignals und der Auflösung und Empfindlichkeit des Radarsensors, einen Maximalabstand geben, innerhalb dessen überhaupt nur eine gemäß der vorliegenden Zusatzerfindung mögliche Steuerung erfolgen kann. Auch obliegt es dem jeweiligen Fachmann, durch geeignete Ausbildung der zusammenwirkenden Elemente eine Signalwirkung zu erhöhen, beispielsweise durch Metallisierung einer Lautsprechermembran des Bewegungsgebers oder Maßnahmen zur Erhöhung der Bewegungsamplitude.
dabei die einzelnen Komponenten modular vorgesehen oder fest in einer Einheit montiert sein.

Auch ist es möglich, wesentliche Teile der vorbeschriebenen Steuervorrichtung bzw. der Auswerteinheit mit Hilfe von fest verdrahteter Schaltungstechnologie zu realisieren, statt sie mit Hilfe geeignet programmierter Mikrocontroller zu implementieren.

## Patentansprüche

1. Beleuchtungsvorrichtung mit einem zum Beleuchten einer Schaufensterauslage (18) od.dgl. Präsentationsfläche eingerichteten Leuchtmittel (36), das an einer Trägervorrichtung (24) in einem Schaufensterinnenbereich (14) befestigt ist, der von einem Schaufensteraußenbereich (16) durch eine transparente Scheibe (12) od.dgl. Trennelement abgetrennt ist,
**gekennzeichnet durch**
eine im Schaufensterinnenbereich (14) angeordnete Sensoreinrichtung (28), die einen in den Schaufensteraußenbereich (16) gerichteten Erfassungsbereich (30) zum Erfassen einer Bewegung und/oder Anwesenheit eines Objekts im Erfassungsbereich aufweist, wobei die Sensoreinrichtung als auf Mikrowellenbasis arbeitender Radarsensor (28) ausgebildet ist, dessen emittierte Sensorsignale zum Durchdringen des Trennelements (12) geeignet sind,
und eine Steuervorrichtung (34) zum Ausführen einer Betriebszustandssteuerung des Leuchtmittels (36) als Reaktion auf ein Ausgangssignal der Sensoreinrichtung (28), der eine Auswerteinheit (40) zugeordnet ist, die zum Erfassen von Ausgangssignalen der Sensoreinheit (28) und von Betriebszuständen des Leuchtmittels (36) eingerichtet ist und Auswertsignale erzeugt, die Erfassungszeitpunkte und Erfassungszeiträume der Sensoreinrichtung (28) repräsentieren.

2. Vorrichtung nach Anspruch 1, **dadurch gekennzeichnet, daß** die Sensoreinrichtung (28) an der Trägervorrichtung (24) gehalten ist.

3. Vorrichtung nach Anspruch 1 oder 2, **dadurch gekennzeichnet, daß** der Radarsensor (28) eine Antenne (26) aufweist, die als Schlitzantenne, Mikrostreifen-Leitungsantenne oder als sonstige, mit auf einem flachen Substrat gebildeten Strahlern aufgebaute Antenne realisiert.

4. Vorrichtung nach Anspruch 3, **dadurch gekennzeichnet, daß** die Antenne (26) Mittel zum Einstellen des Erfassungsbereichs (30) des Radarsensors (28) aufweist.

5. Vorrichtung nach einem der Ansprüche 1 bis 4, **dadurch gekennzeichnet, daß** der Radarsensor (28) ein Breitband-Impulsradarsensor ist, der das Erfassen von Bewegung und/oder Anweseheit auf der Basis von am Objekt reflektierten, breitbandigen Radarimpulsen bewirkt.

6. Vorrichtung nach einem der Ansprüche 1 bis 5, **dadurch gekennzeichnet, daß** der Radarsensor (28) Sendesignale erzeugt, die zwischen 1 und etwa 20 GHz liegen.

7. Vorrichtung nach einem der Ansprüche 1 bis 6, **dadurch gekennzeichnet, daß** die Steuervorrichtung (34) als Reaktion auf ein Erfassen einer Bewegung und/oder Anwesenheit eines Objekts das Leuchtmittel (36) aktiviert und die Steuervorrichtung (34) ein Verzögerungsglied aufweist, das so ausgebildet ist, daß eine Deaktivierung des Leuchtmittels (36) erst einen vorbestimmten Zeitabstand nach einem Erfassen fehlender Bewegung bzw. fehlender Anwesenheit durch die Sensoreinrichtung (28) erfolgt.

8. Vorrichtung nach einem der Ansprüche 1 bis 7, **gekennzeichnet durch** eine Einrichtung (38) zum Erfassen einer Umgebungshelligkeit, wobei diese Einrichtung (38) so auf die Steuervorrichtung (34) wirkt, daß eine Aktivierung oder Deaktivierung des Leuchtmittels (36) von einem Steuersignal der Umgebungshelligkeits-Erfassungseinrichtung (38) abhängig ist.

9. Vorrichtung nach Anspruch 8, **dadurch gekennzeichnet, daß** die Steuervorrichtung (34) zum kontinuierlichen, stufenlosen Regeln einer Helligkeit des Leuchtmittels (36) als Reaktion auf das Steuersignal der Umgebungshelligkeits-Erfassungseinrichtung (38) ausgebildet ist.

10. Vorrichtung nach einem der Ansprüche 1 bis 9, **gekennzeichnet durch** eine Mehrzahl von abnehmbar an der Trägervorrichtung (24) befestigbaren Leuchtmitteln (20, 36).

11. Vorrichtung nach einem der Ansprüche 1 bis 10, **gekennzeichnet durch** eine Mehrzahl von jeweils mindestens einem Leuchtmittel (36) und einer Sensoreinheit (28) zugeordneten Steuervorrichtungen (34), die für eine Mehrzahl von getrennt zu beleuchtenden Präsentationsflächen (18) vorgesehen und mittels eines gemeinsamen Datenbusses (44) verbunden sind.

12. Beleuchtungsvorrichtung nach einem der Ansprüche 1 bis 11, **gekennzeichnet durch** eine Steuereinrichtung mit einem zum Erzeugen eines vorbestimmten, sensorseitig von der Bewegung einer Person unterscheidbaren, mechanischen Bewegungssignals ausgebildeten Bewegungsgeber (12,14,16),
einer mit der Sensoreinrichtung (22,24) verbundenen Dekodiereinrichtung (30) zum Erfassen des mechanischen Bewegungssignals als elektronisches Signal aus einem Bewegungserkennungssignal der Sensoreinrichtung
und einer mit der Dekodiereinrichtung zusammenwirkenden Zustandssteuereinrichtung (30) zum Einstellen oder Bestimmen von Betriebsparametern der Beleuchtungsvorrichtung als Reaktion auf das mechanische Bewegungssignal.

13. Beleuchtungsvorrichtung nach Anspruch 12, **dadurch gekennzeichnet, daß** der Bewegungsgeber einen elektromechanischen Energiewandler (12), insbesondere einen Lautsprecher, aufweist, der als Reaktion auf eine elektrische Ansteuerung das mechanische Bewegungssignal erzeugt.

## Claims

1. Lighting apparatus with a lighting means (36) which is designed for lighting a shop window display (18) or the like presentation area and which is attached to a carrier device (24) in a shop window inner region (14) which is separated from a shop window outer region (16) by a transparent pane (12) or the like dividing element, **characterised by** a sensor device (28) which is arranged in the shop window inner region (14) and which comprises a detection region (30) directed into the shop window outer region (16) for the detection of a movement and/or presence of an object in the detection region, wherein the sensor device is constructed as a radar sensor (28) operating on a microwave basis, whose emitted sensor signals are suitable for penetrating the dividing element (12), and a control device (34) for carrying out status control of the lighting means (36) as a reaction to an output signal of the sensor device (28), with which is associated an evaluation unit (40) which is designed for the detection of output signals of the sensor unit (28) and of the status of the lighting means (36) and generates evaluation signals which represent detection times and detection periods of the sensor device (28).

2. Apparatus according to claim 1, **characterised in that** the sensor device (28) is held on the carrier device (24).

3. Apparatus according to claim 1 or 2, **characterised in that** the radar sensor (28) comprises an aerial (26) which is constructed as a slot aerial, a microstrip transmission aerial or as some other aerial constructed with radiating elements formed on a flat substrate.

4. Apparatus according to claim 3, **characterised in that** the aerial (26) comprises means for adjusting the detection region (30) of the radar sensor (28).

5. Apparatus according to any of claims 1 to 4,
**characterised in that** the radar sensor (28) is a broadband pulse radar sensor which effects the detection of movement and/or presence on the basis of broadband radar pulses reflected at the object.

6. Apparatus according to any of claims 1 to 5, **characterised in that** the radar sensor (28) generates transmission signals which are between 1 and approximately 20 GHz.

7. Apparatus according to any of claims 1 to 6, **characterised in that** the control device (34) activates the lighting means (36) as a reaction to detection of a movement and/or presence of an object and the control device (34) comprises a time lag device which is constructed in such a way that deactivation of the lighting means (36) takes place only a predetermined interval of time after detection of an absence of movement or an absence of presence by the sensor device (28).

8. Apparatus according to any of claims 1 to 7, **characterised by** a device (38) for the detection of an ambient brightness, wherein this device (38) acts on the control device (34) in such a way that activation or deactivation of the lighting means (36) is dependent upon a control signal of the ambient brightness detection device (38).

9. Apparatus according to claim 8, **characterised in that** the control device (34) is designed for the continuous, infinitely variable regulation of brightness of the lighting means (36) as a reaction to the control signal of the ambient brightness detection device (38).

10. Apparatus according to any of claims 1 to 9, **characterised by** a plurality of lighting means (20, 36) which can be removably attached to the carrier device (24).

11. Apparatus according to any of claims 1 to 10,
**characterised by** a plurality of control devices (34) which are in each case associated with at lease one lighting means (36) and a sensor unit (28) and which are provided for a plurality of presentation areas (18) to be illuminated separately and connected by means of a common data bus (44).

12. Lighting apparatus according to any of claims 1 to 11, **characterised by** a control device with a movement transmitter (12, 14, 16) designed for generating a predetermined mechanical movement signal which can be distinguished by the sensor from the movement of a person, a decoding device (30) connected to the sensor device (22, 24) for detection of the mechanical movement signal as an electronic signal from a movement detection signal of the sensor device, and a status control device (30) cooperating with the decoding device for adjusting or determining operating parameters of the lighting device as a reaction to the mechanical movement signal.

13. Lighting apparatus according to claim 12, **characterised in that** the movement transmitter comprises an electromechanical energy transducer (12), in particular a loudspeaker, which generates the mechanical movement signal as a reaction to electrical triggering.

## Revendications

1. Dispositif d'éclairage qui comprend un moyen d'éclairage (36) disposé pour éclairer une vitrine (18) de présentation ou une surface de présentation similaire, qui est fixé à un organe de support (24) dans une zone intérieure (14) de vitrine, et qui est séparée d'une zone (16) extérieure à la vitrine par une vitre transparente (12) ou par un élément de séparation similaire,
**caractérisé par** :
- un organe capteur (28) disposé dans la zone (14) intérieure à la vitrine, qui comporte une zone de saisie (30) disposée dans la zone (16) extérieure à la vitrine pour saisir un déplacement et/ou la présence d'un objet dans la zone de saisie, l'organe capteur étant réalisé sous la forme d'un capteur radar (28) travaillant à partir de micro-ondes et dont les signaux de capteur émis sont appropriés pour traverser l'élément de séparation (12); et
- par un organe de commande (34) pour réaliser une commande d'état de fonctionnement du moyen d'éclairage (36) en réaction à un signal de sortie de l'organe capteur (28), l'organe de commande étant associé à une unité d'évaluation (40) qui est disposée pour saisir des signaux de sortie de l'unité de capteur (28) et les étais de fonctionnement du moyen d'éclairage (36), et qui crée des signaux d'évaluations, qui représentent les instants de saisie et les intervalles temporels de saisie de l'organe capteur (28).

2. Dispositif selon la revendication 1, **caractérisé en ce que** l'organe capteur (28) est porté par l'organe de support (24).

3. Dispositif selon la revendication 1 ou 2, **caractérisé en ce que** le capteur radar (28) comporte une antenne (26) qui est réalisée sous la forme d'une antenne à fente, d'une antenne conductrice microbande ou similaire, l'antenne étant réalisée avec des émetteurs construits sur un substrat plat.

4. Dispositif selon la revendication 3, **caractérisé en ce que** l'antenne (26) comporte des moyens de réglage de la zone de saisie (30) du capteur radar (28).

5. Dispositif selon l'une des revendications 1 à 4, **caractérisé en ce que** le capteur radar (28) est un capteur radar à impulsions à bande large, qui agit pour saisir le déplacement et/ou la présence à partir des impulsions radar à bande large réfléchies sur l'objet.

6. Dispositif selon l'une des revendications 1 à 5, **caractérisé en ce que** le capteur radar (28) crée des signaux d'émission, qui sont situés entre 1 et environ 20 GHz.

7. Dispositif selon l'une des revendications 1 à 6, **caractérisé en ce que** l'organe de commande (34) active le moyen d'éclairage (36) en réaction à une saisie d'un déplacement et/ou de la présence d'un objet, et en ce que l'organe de commande (34) comporte un organe de temporisation, qui est réalisé de telle façon qu'il se produise une désactivation du moyen d'éclairage (36) après une période de temps prcdéterminée suivant le défaut de saisie par l'organe capteur (28) d'un déplacement ou d'une présence.

8. Dispositif selon l'une des revendications 1 à 7, **caractérisé par** un organe (38) de saisie de la luminosité de l'environnement, cet organe (38) agissant sur l'organe de commande (34) de telle façon que l'activation ou la désactivation du moyen d'éclairage (36) soit fonction d'un signal de commande de l'organe de saisie (38) de la luminosité de l'environnement.

9. Dispositif selon la revendication 8, **caractérisé en ce que** l'organe de commande (34) est réalisé de manière à permettre le réglage continu d'une luminosité du moyen d'éclairage (36) en réaction au signal de commande de l'organe de saisie (38) de la luminosité de l'environnement.

10. Dispositif selon l'une des revendications 1 à 9, **caractérisé par** une pluralité de moyens d'éclairage (20, 36) susceptibles d'être fixés de façon amovible sur l'organe de support (24).

11. Dispositif selon l'une des revendications 1 à 10, **caractérisé par** une pluralité d'organes de commande (34) associés chacun à au moins un moyen d'éclairage (36) et à une unité de capteur (28), ces organes de commande étant prévus pour une pluralité de surfaces de présentation (18) séparées et à éclairer, et étant reliés à l'aide d'un bus de données commun (44).

12. Dispositif d'éclairage selon l'une des revendications 1 à 11, **caractérisé par** un organe de commande muni d'un transmetteur de déplacement (12, 14, 16) réalisé pour produire un signal mécanique de déplacement prédéterminé, susceptible d'être distingué, du côté du capteur, du déplacement d'une personne et par un organe de décodage (30) relié à l'organe capteur (22, 24) pour saisir le signal mécanique de déplacement comme signal électronique à partir d'un signal de reconnaissance de déplacement de l'organe capteur, et par un organe de commande d'état (30) coopérant avec l'organe de décodage pour régler ou pour estimer les paramètres de fonctionnement de l'organe d'éclairage en réaction au signal mécanique de déplacement.

13. Dispositif d'éclairage selon la revendication 12, **caractérisé en ce que** le transmetteur de déplacement comporte un transformateur électromécanique d'énergie (12), en particulier un haut-parleur, qui crée le signal mécanique de déplacement en réaction à une commande électrique.
